Europäisches Patentamt

European Patent Office

Office européen des brevets

(11) Veröffentlichungsnummer: **0 364 873**
**A2**

(12) **EUROPÄISCHE PATENTANMELDUNG**

(21) Anmeldenummer: 89118902.9

(22) Anmeldetag: 11.10.89

(51) Int. Cl.⁵: **B62B 3/10**

(30) Priorität: 19.10.88 DE 3835586

(43) Veröffentlichungstag der Anmeldung:
25.04.90 Patentblatt 90/17

(84) Benannte Vertragsstaaten:
DE FR GB IT NL

(71) Anmelder: **WANZL METALLWARENFABRIK GMBH**
**Postfach 1129**
**D-8874 Leipheim(DE)**

(72) Erfinder: **Pech, Raimund**
**Weissenhorner Strasse 9**
**D-8870 Günzburg(DE)**
Erfinder: **Wanzl, Rudolf**
**Sonnenweg 8**
**D-8874 Leipheim(DE)**

(54) **Einkaufswagen.**

(57) Die Erfindung betrifft einen ineinanderschiebbaren Einkaufswagen (1) mit einem Fahrgestell (2), das einen Korb (3) trägt, dessen rückwärtiges Ende (5) durch eine in das Korbinnere verschwenkbare Klappe (8) verschließbar ist, wobei die Klappe (8) ein Einhängeteil (9) und ein an das Einhängeteil (9) angelenktes Rückenteil (10) aufweist, die gemeinsam eine Sitzplatte (12) für Kleinkinder tragen. Um beim Gebrauch des Einkaufswagens (1) Klappergeräusche zu reduzieren, die erfahrungsgemäß durch das Einhängeteil (9) und durch das Rückenteil (10) verursacht werden, sind das Einhänge- und das Rückenteil (9, 10) durch zwei aus Kunststoff gefertigte Verbindungsteile (16) miteinander verbunden.

Fig.1

EP 0 364 873 A2

## Einkaufswagen

Die Erfindung betrifft einen ineinanderschiebbaren Einkaufswagen mit einem Fahrgestell, das einen Korb trägt, dessen rückwärtiges Ende durch eine in das Korbinnere verschwenkbare Klappe verschließbar ist, wobei die Klappe ein Einhängeteil und ein an das Einhängeteil angelenktes Rückenteil aufweist, die gemeinsam eine Sitzplatte für Kleinkinder tragen.

Einkaufswagen dieser Art sind unter der Bezeichnung "Einkaufswagen mit Kindersitz" bekannt. Der Kindersitz befindet sich bei diesen Einkaufswagen an der Klappe. Gewöhnlich besteht die Klappe aus einem Einhängeteil, einem Rückenteil und aus einer Sitzplatte. Das Einhängeteil und das Rückenteil sind in der üblichen Drahtgitterbauweise gefertigt, während die Sitzplatte in der Regel aus Kunststoff besteht. Das Rückenteil besitzt an seiner unteren Seite zwei Drahtschlaufen, mit welchen es an einem Querstab des Einhängeteiles verschwenkbar angelenkt ist. Diese gelenkige Verbindung läßt zwischen dem Einhängeteil und dem Rückenteil ein Spiel entstehen, welches bewirkt, daß das Einhängeteil und das Rückenteil beim Fahren des Einkaufswagens je nach Bodenunebenheiten mehr oder minder laut klappern. Diese Geräuschentwicklung ist lästig, vor allem dann, wenn viele Einkaufswagen gleichzeitig, wie in Supermärkten üblich, bewegt werden.

Die Aufgabe der Erfindung besteht darin, bei einem Einkaufswagen der gattungsgemäßen Art eine Klappe zu entwickeln, bei der das Einhängeteil und das Rückenteil auf einfache Weise so miteinander verbunden sind, daß beim Bewegen des Einkaufswagens auch auf relativ unebenem Boden eine hörbare Geräuschentwicklung vermieden wird.

Die Erfindung ist erfindungsgemäß dadurch gelöst, daß das Einhängeteil und das Rückenteil durch zwei aus stoßdämpfendem Kunststoff gefertigte Verbindungsteile miteinander verbunden sind. Die Verbindungsteile verhindern in vorteilhafter Weise, daß beim Bewegen eines Einkaufswagens metallische Flächen des Einhänge- und Rückenteiles gegeneinander stoßen. Dadurch wird ein Klappern dieser Teile verhindert.

Bei einem bevorzugten Ausführungsbeispiel bestehen die Verbindungsteile aus zwei gleichen Klemmteilen, die je zwei halbkreisförmige Ausnehmungen zur Aufnahme je eines am Einhänge- und am Rückenteil angeordneten Querstabes aufweisen. Die Klemmteile sind gegeneinander formschlüssig verriegelbar.

Die Erfindung wird anhand eines Ausführungsbeispieles näher erläutert. Es zeigt

Fig. 1 einen Einkaufswagen der üblichen Bauweise;

Fig. 2 ein Klemmteil eines Verbindungsteiles;

Fig. 3 zwei zu einem Verbindungsteil zusammengefügte Klemmteile sowie

Fig. 4 den Verbindungsbereich des Einhänge- und des Rückenteils einer Klappe.

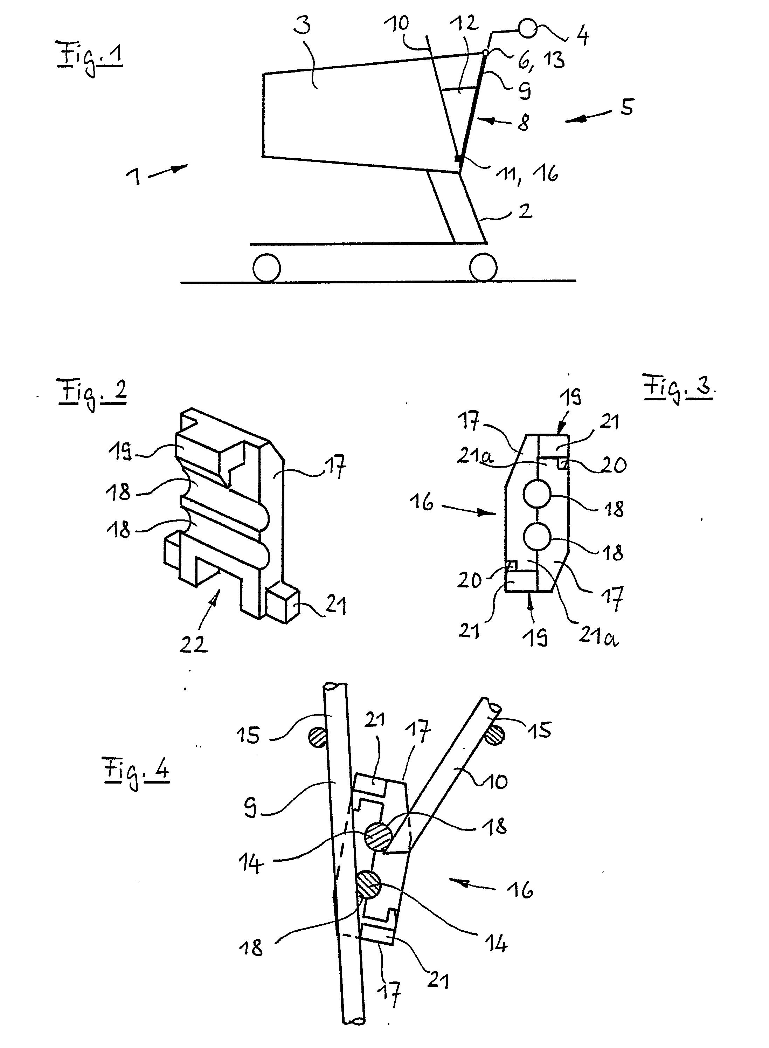

Der in Fig. 1 dargestellte Einkaufswagen 1 entspricht der üblichen Bauweise. So weist der Einkaufswagen 1 ein Fahrgestell 2 auf, das einen Korb 3 trägt, der wiederum zur Aufnahme von Einkaufsgut dient. Am Korb 3 ist gewöhnlich eine Schiebeeinrichtung 4 in Form eines Handgriffes vorgesehen. Zusätzliche Warenablagen wie Bodenrost, ausklappbare Ablage, Einhängekorb u. dgl. können am Einkaufswagen 1 angeordnet sein. Der Korb 3 und das Fahrgestell 2 sind konisch gestaltet, so daß sich gleiche Einkaufswagen 1 platzsparend ineinanderschieben lassen. Das rückwärtige Ende 5 des Korbes 3 wird in bekannter Weise durch eine um eine waagrechte Achse 6 in das Korbinnere verschwenkbare Klappe 8 gebildet. Die Klappe 8 besteht aus einem Einhängeteil 9, einem im unteren Bereich des Einhängeteiles 9 an dieses um eine waagrechte Achse 11 verschwenkbares Rückenteil 10 und aus einer aus Draht und/oder aus Kunststoff gefertigten Sitzplatte 12, die sich sowohl am Einhängeteil 9 als auch am Rückenteil 10 abstützt. Das Einhängeteil 9 weist im oberen Bereich gewöhnlich zwei Schlaufen 13 auf, mittels derer das Einhängeteil 9 an einem oberen, die beiden Seitenwände 7 des Korbes 3 verbindenden Querdraht drehbeweglich arretiert ist. Sowohl das Einhängeteil 9, als auch das Rückenteil 10 sind im Beispiel in der üblichen Drahtgitterkonstruktion gestaltet. Auf eine nähere Beschreibung dieser Konstruktion kann deshalb verzichtet werden. In der Zeichnung ist ein Verbindungsteil 16 schematisch eingezeichnet. Das Einhängeteil 9 und das Rückenteil 10 sind in ihrem unteren Bereich durch wenigstens zwei derartige Verbindungsteile 16 entlang einer waagrechten Achse 11 miteinander gelenkig verbunden. Das Rückenteil 10 kann somit gegenüber dem Einhängeteil 9 eine begrenzte Wegstrecke weit verschwenkt werden, wobei die Sitzplatte 12 als Anschlag dient.

Die Figuren 2 und 3 vermitteln die Bauweise des Verbindungsteiles 16. Dieses (16) besteht im Beispiel aus zwei aus elastischem Kunststoff gefertigten, gleich gestalteten Klemmteilen 17, was nicht ausschließt, daß die Klemmteile 17 auch unterschiedlich zueinander ausgebildet sein können. Jedes Klemmteil 17 besitzt zwei auf Abstand gehaltene waagrecht angeordnete Nuten 18 halbkreisförmigen Querschnitts. Die Nuten 18 sind zur Aufnahme je eines am Einhängeteil 9 und am Rückenteil 10 angeordneten Querstabes 14, vgl. Fig. 4, vorgesehen. Jedes Klemmteil 17 weist einen Vorsprung 19 mit daran angeordneter Nase 20 auf. Jeder Vorsprung 19 bzw. jede Nase 20 hintergreift einen Steg 21a des jeweils anderen Klemmteiles 17. Eben Anlagefläche sowie abgeschrägte Flächen an den Klemmteilen 17 sorgen dafür, daß das durch die Klemmteile 17 gebildete Verbindungsteil 16 nicht aufträgt. Damit ein Verschieben der Klemmteile 17 in Längsrichtung der Querstäbe 14 ausgeschlossen ist, wird jeder Vorsprung 19 in einer Nut 22 des jeweils anderen Klemmteiles 17 fixiert. Nahe dieser Nut 22 sind beidseitig vom Klemmteil 17 wegragende Stege 21 vorgesehen, die im montierten Zustand des Verbindungsteiles 16 an senkrecht zu den Querstäben 14 angeordneten Stäben 15 entweder des Einhängeteiles 9 oder des Rückenteiles 10 anliegen.

Fig. 4 zeigt ein Verbindungsteil 16 in auf ein Einhänge- und ein Rückenteil 9, 10 aufgesetztem Zustand. Durch die Nuten 18 sind je ein Querstab 14 des Einhängeteiles 9 und des Rückenteiles 10 geführt. Jeder Querstab 14 ist an senkrecht zu diesem angeordneten Stäben 15 angeschweißt. Die Klemmteile 17 und damit das Verbindungsteil 16 befinden sich zwischen zwei derartigen Stäben 15 verschiebesicher angeordnet, d.h., der Abstand dieser Stäbe 15 zueinander ist nur geringfügig größer, als die Breite der Klemmteile 17 bzw. des Verbindungsteiles 16. Um ein Verdrehen der Klemmteile 17 um einen der beiden Querstäbe 14 zu verhindern, sind die Klemmteile 17 so geformt, daß ihre Stege 21 an jeweils einem an dem Einhänge- und Rückenteil 9, 10 anliegenden Stab 15 anschlagen. Die Klemmteile 17 werden unter gleichzeitiger Schiebe- und Drehbewegung zueinander auf die Querstäbe 14 aufgesetzt und miteinander formschlüssig verbunden.

## Ansprüche

1. Ineinanderschiebbarer Einkaufswagen (1) mit einem Fahrgestell (2), das einen Korb (3) trägt, dessen rückwärtiges Ende (5) durch eine in das Korbinnere verschwenkbare Klappe (8) verschließbar ist, wobei die Klappe (8) ein Einhängeteil (9) und ein an das Einhängeteil (9) angelenktes Rückenteil (10) aufweist, die gemeinsam eine Sitzplatte (12) für Kleinkinder tragen, dadurch **gekennzeichnet,** daß das Einhängeteil (9) und das Rückenteil (10) durch wenigstens zwei aus stoßdämpfendem Kunststoff gefertigte Verbindungsteile (16) miteinander verbunden sind.

2. Einkaufswagen nach Anspruch 1, dadurch **gekennzeichnet,** daß die Verbindungsteile (16) je einen am Einhängeteil (9) und am Rückenteil (10) angeordneten Querstab (14) umfassen.

3. Einkaufswagen nach Anspruch 1 oder 2, dadurch **gekennzeichnet,** daß die Verbindungsteile (16) jeweils zwischen zwei Stäben (15), die sich sowohl am Einhängeteil (9), als auch am Rückenteil (10) befinden, angeordnet sind.

4. Einkaufswagen nach einem der Ansprüche 1 bis 3, dadurch **gekennzeichnet,** daß jedes Verbindungsteil (16) aus zwei formschlüssig miteinander verbindbaren Klemmteilen (17) besteht.

5. Einkaufswagen nach einem der Ansprüche 1 bis 4, dadurch **gekennzeichnet,** daß die Klemmteile (17) gleich gestaltet sind.

6. Einkaufswagen nach einem der Ansprüche 1 bis 5, dadurch **gekennzeichnet,** daß die Klemmteile (17) mit Nuten (18) zur Aufnahme der Querstäbe (14) ausgestattet sind.

7. Einkaufswagen nach einem der Ansprüche 1 bis 6, dadurch **gekennzeichnet,** daß sich die Klemmteile (17) in montiertem Zustand gegenseitig hintergreifen.

8. Einkaufswagen nach einem der Ansprüche 1 bis 7, dadurch **gekennzeichnet,** daß an den Klemmteilen (17) Stege (21) angeordnet sind, die zur Abstützung der Klemmteile (17) an den Stäben (15) entweder des Einhängeteiles (9) oder des Rückenteiles (10) vorgesehen sind.

Fig. 1

Fig. 2

Fig. 3

Fig. 4